# EUROPÄISCHE PATENTANMELDUNG

(11) **EP 4 614 681 A2**
(43) Veröffentlichungstag der Anmeldung: **10.09.2025**
(21) Anmeldenummer: 25160623.2
(22) Anmeldetag: 27.02.2025
(51) Int. Cl.: H01M 10/6555, H01M 10/6557, H01M 50/209, H01M 50/213, H01M 50/224, H01M 50/244, H01M 50/258, H01M 50/264, H01M 50/289, H01M 50/293, H01M 50/342, H01M 50/358

(54) **AKKUMULATORVORRICHTUNG**

(30) Priorität: 05.03.2024 AT 501892024
(71) Anmelder: Resch, Gerald, 8421 St. Stefan i.R. (AT)
(72) Erfinder: Resch, Gerald, 8421 St. Stefan i.R. (AT)
(74) Vertreter: Wirnsberger & Lerchbaum Patentanwälte OG

(57) **Zusammenfassung**

Die Erfindung betrifft eine Akkumulatorvorrichtung (1), umfassend eine Vielzahl von Akkumulatorzellen (2). Um einen einfachen Aufbau zu erreichen, umfasst die Akkumulatorvorrichtung (1) erfindungsgemäß eine Vielzahl von Halteelementen (3), wobei die Halteelemente (3) miteinander verbunden sind und die Akkumulatorzellen (2) aufnehmen.

## Beschreibung

Die Erfindung betrifft eine Akkumulatorvorrichtung, umfassend eine Vielzahl von Akkumulatorzellen.

Für Elektrofahrzeuge werden Akkumulatorstacks benötigt, welche eine Vielzahl von Akkumulatorzellen beherbergen, sodass mit möglichst wenig Raumbedarf die erforderliche Energie für den Betrieb eines Elektrofahrzeuges bereitgestellt werden kann.

Bekannte Akkumulatorstacks sind im Aufbau relativ komplex und erfordern insbesondere einen hohen Fertigungsaufwand. Da die Akkumulatorzellen fix positioniert sein müssen, sind erforderliche Positionierungselemente vorzusehen. Nach außen hin ist ein Gehäuse erforderlich. Einzelne Elemente und Teile werden hierfür geklebt, was zu einem hohen Fertigungsaufwand führt. Darüber hinaus ergeben sich durch entsprechende Klebeverbindungen auch Probleme, wenn hohe Temperaturen auftreten, beispielsweise wenn eine Akkumulatorzelle versagt und sich weit über Betriebstemperatur erhitzt und gegebenenfalls zu brennen beginnt.

Aufgabe der Erfindung ist es, eine Akkumulatorvorrichtung der eingangs genannten Art derart weiterzubilden, dass die Akkumulatorvorrichtung auf einfache Weise und mit möglichst geringem Aufwand erstellt werden kann.

Diese Aufgabe wird gelöst, wenn eine Vorrichtung der eingangs genannten Art eine Vielzahl von Halteelementen umfasst, wobei die Halteelemente miteinander verbunden sind und die Akkumulatorzellen aufnehmen.

Ein mit der Erfindung erzielter Vorteil ist darin zu sehen, dass durch die vorgesehenen Halteelemente eine sehr kompakte Anordnung der Akkumulatorzellen erfolgen kann und die Halteelemente ohne stoffschlüssige Verbindung eine starre Halterung für die Akkumulatorzellen bilden. Dabei sind die Halteelemente vorzugsweise miteinander insbesondere lösbar verbunden. Es ist somit in einfacher Weise möglich, die Halteelemente nacheinander durch Verbinden derselben anzuordnen, wobei in jedes Halteelement eine Akkumulatorzelle eingelegt wird. Die Halteelemente sind zu diesem Zweck an die Außenmaße der Akkumulatorzellen angepasst. Zweckmäßigerweise entspricht ein freier Innenraum eines Halteelementes den äußeren Dimensionen einer Akkumulatorzelle. Die Akkumulatorzellen können in den Halteelementen formschlüssig aufgenommen sein.

Die Halteelemente sind bevorzugt miteinander durch Stecken verbunden. Hierfür können die Halteelemente mit einer ebenen Grundfläche ausgebildet sein, von welcher Abstandshalter abstehen. Die Abstandshalter können senkrecht von der Grundfläche abstehen. Über die Abstandshalter kann eine Verbindung eines Haltelementes zum nächsten, benachbarten Halteelement hergestellt und gleichzeitig die Akkumulatorzellen aufgenommen werden. Hierfür stehen die Abstandshalter an beiden Seiten von der Grundfläche ab. Bevorzugt ist es, dass die zu beiden Seiten der Grundfläche abstehenden Bereiche eines Abstandshalters unterschiedlich lang sind. Die Abstandshalter sind dabei so ausgebildet, dass die Abstandshalter eines Halteelementes mit den Abstandshaltern des unmittelbar nachfolgenden Halteelementes zusammenwirken. Hierfür können die Abstandshalter korrespondierend ausgebildet sein, beispielsweise mit Rippen, welche korrespondierende Bereiche der Abstandshalter des nächsten Halteelementes aufnehmen. Durch diese einfache Ausbildung der Abstandshalter lässt sich ein starres System einer Halterung für die Akkumulatorzellen aufbauen. Der Vorgang des Zusammenfügens ist zudem schnell, da die Abfolge Halteelement - Einlegen einer Akkumulatorzelle - Einklemmen des nächsten Halteelementes usw. mit geringen Taktzeiten durchführbar und aufgrund des Entfalls einer stoffschlüssigen Verbindung sehr gut automatisierbar ist. Es können damit beliebig lange Zellstapel erstellt werden. Dieses Konzept der aneinanderclippbaren Einheiten mit jeweils einer Akkumulatorzelle und Halteelement lässt sich auch bei unterschiedlich großen Akkumulatorzellen anwenden. Darüber hinaus kann dieses Konzept auch nicht nur bei prismatischen Akkumulatorzellen oder Pouch-Zellen, sondern auch bei Rundzellen angewendet werden. Bei Rundzellen kann ein Halteelement so ausgelegt sein, dass dieses mehrere Rundzellen aufnehmen kann. Bei solchen Halteelementen können jeweils zwei Haltelemente zur Aufnahme der Vielzahl von Rundzellen zusammenwirken.

Wenn Halteelemente für Rundzellen vorgesehen sind, welche jeweils mehrere Rundzellen aufnehmen, sind diese vorzugsweise so ausgelegt, dass diese zwei bis acht Rundzellen aufnehmen können. Die Rundzellen werden dann von den Halteelementen in einer gedachten Ebene gehalten. Die Längsachsen der zylindrischen Rundzellen befinden sich allesamt in dieser gedanklichen Ebene und sind üblicherweise parallel ausgerichtet. Ein erstes Halteelement umfasst dabei die Rundzellen etwa über die Hälfte des Umfanges. Ein damit zusammenwirkendes zweites Halteelement umfasst die Rundzellen umfänglich in jenen Bereichen, in welchen das erste Halteelement die Rundzellen nicht umfasst. Somit umfasst das erste Halteelement einen ersten Teil des Umfangs jeder Rundzelle, das zweite Halteelement einen zweiten Teil des Umfangs jeder Rundzelle. Hierfür weisen die beiden zusammenwirkenden Halteelemente jeweils mehrere, im Querschnitt halbkreisförmige Umschließungsbereiche auf, mit welchen die Rundzellen jeweils über den halben Umfang umfasst werden. Zur Verbindung der beiden Halteelemente können mehrere Rastmarken an den halbkreisförmigen Bereichen vorgesehen sein, die so ausgelegt sind, dass jene des ersten Halteelementes mit jenen des zweiten Halteelementes zusammenwirken. Dadurch kann das erste Halteelement mit dem zweiten Halteelement zusammengesteckt werden. Aufgrund der halbkreisförmigen Bereiche sind die einzelnen Rundzellen voneinander getrennt. Auf diese Weise lässt sich ähnlich wie bei prismatischen Zellen wiederum ein beliebig langer Stapel aufbauen. Dabei sind die Rundzellen bevorzugt quer zu einer Längsrichtung des Stapels angeordnet. Mit anderen Worten befindet sich die erwähnte gedankliche Ebene für eine Lage von Rundzellen normal zu einer Längsachse des Stapels. Die einzelnen Halteelemente können dabei für die verschiedenen Lagen so zueinander versetzt sein, dass die Rundzellen einer Lage auf Lücke zu den Rundzellen benachbarter Lagen von Rundzellen sind. Dadurch lässt sich eine kompakte Anordnung der Rundzellen mit geringem Volumenbedarf erreichen. Die entsprechende Ausführung ergibt sich in einfacher Weise dadurch, dass die Halteelemente entsprechend versetzt angeordnet werden. In einem freien Platz zwischen benachbarten Rundzellen kann ein Wärmerohr angeordnet sein.

Bevorzugt sind die Halteelemente bis auf endseitige Halteelemente ident aufgebaut. Auch die Akkumulatorzellen können alle ident aufgebaut sein, sodass im Grundsatz ein Typ Halteelement und ein Typ Akkumulatorzelle vorliegt. Dies gilt sowohl für prismatische Zellen und Pouch-Zellen als auch Rundzellen.

Die Halteelemente sind mit Vorteil gegossen. Insbesondere können die Halteelemente im Spritzguss oder Strangguss erstellt sein. Die Halteelemente sind bevorzugt aus einem Metall oder einer Legierung, insbesondere Aluminium oder einer Aluminiumlegierung, gebildet, können aber auch aus einem Kunststoff bestehen. Durch die Ausbildung aus einem Metall oder einer Legierung lässt sich die erforderliche Steifigkeit eines Stapels von Akkumulatorzellen erreichen. Darüber hinaus sind Metalle und Legierungen gute Leiter, was einen Wärmetransport von den Akkumulatorzellen weg nach außen hin begünstigt. Wenngleich eine Fertigung der Halteelemente im Spritzguss bevorzugt ist, können für die Halteelemente auch andere Fertigungsmethoden wie beispielsweise spanabhebende Verfahren wie Drehen und/oder Fräsen eingesetzt werden. Nicht ausgeschlossen ist es auch, dass jene Halteelemente, die zwischen den endseitigen Halteelementen angeordnet sind, verschieden ausgebildet sind. Eine idente Ausbildung ist jedoch einer effizienten Fertigung und einem einfachen Aufbau eines Zellstapels wegen bevorzugt. Möglich ist es auch, die Halteelemente durch Stanzen herzustellen. Auch eine Fertigung aus Einzelteilen, die miteinander stoffschlüssig verbunden werden bzw. sind, ist möglich.

Die Akkumulatorzellen sind bevorzugt in einem länglichen Stapel angeordnet. Dabei ist eine Zahl der Akkumulatorzellen beliebig und kann theoretisch bis unendlich laufen. Ein typischer Stapel kann beispielsweise etwa 20 bis 200, beispielsweise 25 bis 100, Akkumulatorzellen umfassen. Die einzelnen Stapel können miteinander kombiniert werden, je nach Leistungsbedarf. Insbesondere wenn eine längliche Ausbildung eines Stapels gegeben ist, können die Halteelemente endseitig eines Stapels Endplatten als weitere Halteelemente umfassen. Die Endplatten dienen primär zur Abdeckung und können aus einem Aluminium oder einer Aluminiumlegierung gefertigt sein, um auch in diesem Bereich mögliche Temperaturspitzen durch einen effektiven Wärmetransport zu vermeiden. Die Endplatten können Teil eines Gehäuses sein oder innerhalb eines Gehäuses angeordnet sein. Ein solches Gehäuse kann insbesondere aus Aluminium oder einer Aluminiumlegierung gebildet sein.

Die einzelnen Akkumulatorzellen können mit einem beliebigen Zellformat ausgebildet sein und als prismatische Zellen oder als Rundzellen oder als Pouch-Zellen ausgebildet sein.

Zwischen den einzelnen Akkumulatorzellen können thermische Barrieren angeordnet sein. Die thermischen Barrieren können beispielsweise aus einem Vlies oder einem anderen Material, welches schlecht wärmeleitend ist oder thermisch isolierend wirkt, gebildet sein, beispielsweise aus einem porösen Material. Bei einem Stapel aus Akkumulatorzellen, die im Querschnitt zur Längsachse des Stapels rechteckig ausgebildet sind, weist die thermische Barriere vorteilhafterweise im Wesentlichen den gleichen Querschnitt wie eine Akkumulatorzelle auf, sodass eine vollflächige Isolation zwischen zwei benachbarten Akkumulatorzellen gegeben ist. Die thermischen Barrieren werden bei der Erstellung des Stapels jeweils mit einer Akkumulatorzelle eingelegt. Eine Dicke einer thermischen Barriere beträgt in der Regel weniger als 5 mm, vorzugsweise weniger als 4 mm, insbesondere weniger als 3 mm, beispielsweise weniger als 2,5 mm. Die thermische Barriere kann biegsam sein, insbesondere wenn diese aus einem Vlies gefertigt ist. Die thermische Barriere ist vorzugsweise metallfrei ausgebildet, um eine möglichst gute Isolierung zu erreichen.

Mit Vorteil umfasst die Akkumulatorvorrichtung einen oder mehrere Kühl- und/oder Heizkörper oder allgemein Temperierungselemente, welche die Akkumulatorzellen umgeben und/oder mit diesen thermisch verbunden sind, um die Akkumulatorzellen auf eine vorbestimmte Temperatur zu bringen. Mit den Kühl- und/oder Heizkörpern kann eine passive, insbesondere aber aktive Temperierung, beispielsweise Kühlung, der Akkumulatorzellen erfolgen. Die Kühl- und/oder Heizkörper sind dabei in der Regel so gestaltet, dass diese mit einem Fluid durchströmbar sind. Das Fluid kann ein Gas oder eine Flüssigkeit wie Wasser oder Öl sein. Die Kühl- und/oder Heizkörper weisen hierfür geeignete Einlässe sowie Auslässe aus, damit ein Fluid durch den jeweiligen Kühl- und/oder Heizkörper fließen kann. Hierfür kann die Akkumulatorvorrichtung ein Fluidreservoir aufweisen, welches mit dem oder den Temperierungselementen in Fluidverbindung steht, sodass die Temperierungselemente entsprechend mit Fluid durchströmbar sind. Des Weiteren können geeignete Umwälzmittel wie Pumpen vorgesehen sein, um das Fluid umzuwälzen. Die Kühl- und/oder Heizkörper können zwecks Wärmeübertragung aus einem hinreichend gut leitenden Material gebildet sein, insbesondere aus einem Metall oder einer Legierung, beispielsweise Aluminium oder einer Aluminiumlegierung. Mit den Kühl- und/oder Heizkörpern ist auch ein Heizen möglich, sodass die Akkumulatorzellen insbesondere für ein Laden auf eine optimale Temperatur gebracht werden können. Insbesondere lässt sich in dieser Weise mit dem Aufbau mit den Halteelementen und einer thermischen Barriere für jede Akkumulatorzelle auch ein sogenanntes "no thermal propagation"-System ("NTP"-System) umsetzen, sodass die einzelnen Akkumulatorzellen in Bezug auf die Temperatur weitgehend unabhängig sind. Dies ist insbesondere dann wichtig, wenn bei einer Akkumulatorzelle ein Schadensfall und Überhitzung auftritt.

Die Temperierungselemente können auf verschiedene Arten ausgebildet sein. Zweckmäßigerweise sind diese so angeordnet, dass eine möglichst effiziente Wärmeübertragung (Kühlen und/oder Heizen, je nach Modus) möglich ist. Das oder die Temperierungselemente können direkt mit den jeweiligen Akkumulatorzellen in Verbindung stehen. Ist dies der Fall, ist eine möglichst vollflächige Anlage des Temperierungselementes an der jeweiligen Akkumulatorzelle zweckmäßig. Dies gilt für die vollflächige Ausbildung auch dann, wenn die Wärmeübertragung mittelbar erfolgt.

Der Begriff des Temperierungselementes ist breit zu verstehen. Dabei kann es sich um gesonderte Heiz- und/oder Kühlkörper handeln, die als separate Strukturen der Akkumulatorvorrichtung vorliegen. In diesen Strukturen kann ein Fluid, insbesondere ein flüssiges Fluid, geführt werden. Hierfür kommen insbesondere Öl oder Wasser infrage. Eine Fluidführung lässt sich aber auch erreichen, wenn die Halteelemente oder andere Elemente der Akkumulatorvorrichtung einen Teil eines Temperierungselementes bilden.

Das oder die Temperierungselemente werden vorzugsweise mit einem Fluid wie Öl oder Wasser durchströmt. Zur Einstellung einer Temperatur kann die Akkumulatorvorrichtung mit einer geeigneten Steuer- und/oder Regelungseinrichtung ausgebildet und/oder mit dieser verbunden sein, sodass sich insbesondere eine konstante Temperatur (innerhalb vorgegebener Schwellwerte) einstellen bzw. halten lässt.

Wenn das Temperierungselement oder gegebenenfalls mehrere Temperierungselemente mit Öl betrieben werden, kann hierfür zweckmäßigerweise vorgesehen sein, dass eine Grundfläche eines Halteelementes derart verlängert ist, dass eine Zwangsführung von Öl als Fluid um die Akkumulatorzellen herum erreicht wird. Die Halteelemente können dann beispielsweise an einem umgebenen Gehäuse abwechselnd links oder rechts zur Anlage kommen, sodass das Fluid an den Anlagebereichen zwangsgeführt umgeleitet wird. Zweckmäßigerweise erfolgt dies jeweils über zwei Akkumulatorzellen. Das Fluid wird dann mäanderförmig um die Akkumulatorzellen geführt. Hierfür können an den Akkumulatorzellen außenseitig auch Abstandshalter angeordnet sein. Ein Stapel aus derart aufgebauten Akkumulatorzellen wird in einem Gehäuse eingebracht und mit diesem zumindest punktuell verschweißt, um die erforderliche Dichtheit zu erreichen.

Ist das Temperierungselement wie vorstehend dargestellt zur Führung von Öl ausgelegt, ist eine Mindestdichtigkeit erforderlich. Mit Wasser lassen sich diesbezüglich einfachere Lösungen umsetzen, indem das Halteelement zusätzlich mit einer Kühlplatte ausgerüstet wird. Die Kühlplatte kann etwa mit einer wesentlichen gleichen Länge und einer gleichen Breite wie die Grundfläche eines Halteelementes ausgebildet sein. Die Kühlplatte kann mit dem Halteelement verschweißt sein, beispielsweise durch punktuelle Verschweißung. Die Kühlplatte ist dabei insbesondere so ausgebildet, dass diese zumindest einen Einlass und zumindest einen Auslass aufweist, welche im Inneren durch eine Fluidleitung verbunden sind. Dadurch kann Wasser über den Einlass eingeführt und über den Auslass wieder abgeführt werden. Die Kühlplatten der einzelnen Halteelemente können miteinander verbunden sein, sodass alle Akkumulatorzellen durch die Anspeisung der Kühlplatten mit Wasser zumindest in etwa auf derselben Temperatur gehalten werden können.

Werden Rundzellen eingesetzt, wobei die Halteelemente jeweils mehrere Rundzellen in einer Rundzellenlage aufnehmen, ist es bevorzugt, wenn ein oder mehrere Temperierungselemente kopfseitig und/oder fußseitig der Rundzellen angeordnet sind, sich also normal zu Längsachsen der Rundzellen und damit auch quer zu deren Längsachsen erstrecken. Damit erfolgt eine Einstellung einer Temperatur flächig über eine Oberseite und/oder eine Unterseite eines Stapels von Akkumulatorzellen. Da sich bei einer Anordnung von Rundzellen mit Halteelementen parallel zu den Längsachsen der Rundzellen Öffnungen ergeben können, insbesondere vertikal durchgehende Öffnungen, kann ein kopfseitiges Temperierungselement über die Öffnungen mit einem fußseitigen Temperierungselement verbunden sein. Dabei kann eine Zwangsführung vorgesehen sein, sodass Öl, Wasser oder ein anderes flüssiges Fluid um die Akkumulatorzellen herumgeführt wird. Dadurch kann eine effiziente Kühlung erreicht werden. Bevorzugt ist dabei vorgesehen, dass das Fluid für eine einzelne Rundzellenlage kopfseitig zugeführt und seitlich entlang einer ersten Seitenfläche der Rundzellenlage vertikal auf- oder abwärts geführt wird, wonach nach fußseitiger Umlenkung an der gegenüberliegenden Seitenfläche der Rundzellenlage wiederum eine vertikale Fluidführung erfolgt, allerdings in entgegengesetzter Richtung (auf- oder abwärts, je nach Vertikalführung an der gegenüberliegenden Seitenfläche der Rundzellenlage). Ob eine Fluidführung von einer Oberseite eines Stapels von Rundzellen zu einer Unterseite desselben Stapels erfolgt, hängt vom erforderlichen thermischen Management ab. Grundsätzlich ist es auch möglich, dass lediglich an der Oberseite und/oder der Unterseite temperiert wird.

Ist eine Ölkühlung vorgesehen, können um einzelne Akkumulatorzellen herum Leitbleche zum Leiten eines Öls vorgesehen sein, insbesondere wenn es sich um quaderförmige Akkumulatorzellen handelt. Die Leitbleche können dabei so angeordnet sein, dass diese eine Akkumulatorzelle bis auf jene Seitenflächen, an welchen eine Kontaktierung mit Stromschienen erfolgt, vollständig umgeben. Die Leitbleche liegen dabei an den Akkumulatorzellen an, wodurch ein effizienter Wärmetransfer erreicht wird.

Bei einer Wasserkühlung kann insbesondere auch vorgesehen sein, dass am Haltelement eine Platte angeordnet wird, durch welche ein Fluid führbar ist. Dies Platte kann insbesondere als Kühlplatte fungieren. Die Platte kann aus einem Kunststoff gebildet sein und weist im Inneren eine Struktur auf, durch welche ein Fluid, insbesondere Wasser, führbar ist. Hierfür weist die Kühlplatte geeignete Anschlüsse auf. Die Platte bzw. ist bevorzugt mit einer Länge und einer Breite ausgebildet, welche einer Länge und Breite eines Halteelementes und damit letztlich auch einer Länge und Breite einer Akkumulatorzelle bei quadratischer Ausbildung entspricht.

Für eine effiziente Temperierung können an den Akkumulatorzellen außenseitig unmittelbar oder mittelbar Strukturen angeordnet sein, die mit einem Fluid durchströmbar sind, beispielsweise Leitbleche mit geradlinigen Erhebungen. Auch mäanderförmige Fluidführungen können in einem Leitblech eingearbeitet sein.

Es kann vorgesehen sein, dass die Akkumulatorzellen in einem, vorzugsweise linearen, Stapel angeordnet sind und der Stapel kopfseitig und fußseitig von einem Kühl- und/oder Heizkörper umgeben ist. Die Kühl- und/oder Heizkörper werden so angeordnet, dass die Akkumulatorzellen von oben und unten gut kühlbar und optional beheizbar sind. Die Pole der einzelnen Akkumulatorzellen sind seitlich angeordnet und können durch geeignete Stromschienen verbunden sein. Es ist aber auch eine Anordnung möglich, in welcher die Kühl- und /oder Heizkörper seitlich angeordnet sind und sich die Pole kopfseitig und/oder fußseitig befinden. Dies hängt vom jeweiligen Akkumulatortyp ab. Allgemein ist es bevorzugt, dass möglichst viel einer äußeren Fläche der Akkumulatorzellen für eine effektive Kühlung und optional Beheizung nutzbar ist.

Besonders bevorzugt ist vorgesehen, dass die Akkumulatorvorrichtung ein Sicherheitselement mit Sollbruchstellen, vorzugsweise einer oder mehrerer Sollbruchstellen für jede einzelne Akkumulatorzelle, umfasst, wobei die Sollbruchstellen bei einem vorbestimmten Druck, der durch eine Akkumulatorzelle verursacht wird, öffnen. Dadurch ist es möglich, dass auch dann, wenn eine Vielzahl von Akkumulatorzellen angeordnet sind, bei Versagen einer Akkumulatorzelle ein kontrolliertes Ausgasen erfolgen kann. Zusammen mit den gegebenenfalls vorgesehenen thermischen Barrieren zwischen den einzelnen Akkumulatorzellen ist damit auch eine hohe Sicherheit gegeben. Eine gegebenenfalls auch brennende Akkumulatorzelle kann funktionslos werden, dabei allerdings nicht weitere Akkumulatorzellen wesentlich beeinträchtigen. Das Sicherheitselement kann als längserstrecktes Blech ausgebildet sein und aus einem Metall oder einer Legierung, beispielsweise einem Stahl, bestehen, um auftretenden Temperaturspitzen standhalten zu können.

In diesem Zusammenhang kann insbesondere auch vorgesehen sein, dass die Akkumulatorvorrichtung ein Gasleitsystem umfasst, durch welches von einer Akkumulatorzelle gegebenenfalls abgegebene Gase leitbar sind, wobei im Gasleitsystem Partikelfänger angeordnet sind. Dies ist insbesondere bei einer Verwendung einer Akkumulatorvorrichtung im Fahrzeugbereich wichtig. In einem Fahrzeug können schadhafte Akkumulatorzellen dazu führen, dass kontaminierte Gase auch in das Fahrzeuginnere gelangen. Durch die vorgesehenen Partikelfänger wird die Gefahr verringert, dass schädliche Gase in das Fahrzeuginnere gelangen. Die Partikelfänger können dabei als mechanische Partikelfänger ausgebildet sein. Entsprechende mechanische Partikelfänger stellen für Partikel nicht oder nicht leicht passierbare Hindernisse dar. Es können aber auch andere Partikelfilter wie Membranen oder dergleichen Anwendung finden.

Ein Stapel von Akkumulatorzellen kann sich in Abhängigkeit von einer Temperatur merklich ausdehnen und wieder zusammenziehen. Die Halteelemente können in diesem Zusammenhang so ausgebildet sein, dass diese einen Längenausgleich der Akkumulatorzellen erlauben. Dies erfolgt zweckmäßigerweise über eine geeignete Ausbildung der Abstandshalter, die so eingerichtet sind, dass Längenänderungen eines Stapels von Akkumulatorzellen möglich sind. Hierfür können die Abstandshalter in vorgegebenen Bereichen elastisch verformbar sein.

Darüber hinaus kann eine erfindungsgemäße Akkumulatorzelle auch Wärmerohre umfassen, insbesondere wenn es sich um eine Hochleistungszelle handelt.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 eine Explosionsdarstellung einer ersten Variante einer erfindungsgemäßen Akkumulatorvorrichtung;
Fig. 2 ein Halteelement in stirnseitiger Ansicht;
Fig. 3 ein Halteelement in perspektivischer Darstellung;
Fig. 4 eine perspektivische Darstellung von Halteelementen und einzelner Akkumulatorzellen;
Fig. 5 eine perspektivische Darstellung von Teilen einer erfindungsgemäßen Akkumulatorvorrichtung;
Fig. 6 eine weitere perspektivische Darstellung von Teilen einer erfindungsgemäßen Akkumulatorvorrichtung;
Fig. 7 eine perspektivische Darstellung einer erfindungsgemäßen Akkumulatorvorrichtung mit Blick auf einen Partikelfänger;
Fig. 8 eine perspektivische Ansicht von Teilen einer erfindungsgemäßen Akkumulatorvorrichtung mit einem Partikelfänger;
Fig. 9 ein Haltelement mit integrierten Fluidleitungen eines Temperierungselementes;
Fig. 10 mehrere aneinander angeordnete Halteelemente gemäß Fig. 9;
Fig. 11 eine schematische Darstellung eines umgebenden Flusses in einer Anordnung von Halteelementen gemäß Fig. 10;
Fig. 12 eine Draufsicht auf ein Halteelement mit einer integrierten Kühlplatte;
Fig. 13 eine Seitenansicht des Halteelementes aus Fig. 12;
Fig. 14 eine Explosionsdarstellung einer Variante einer erfindungsgemäßen Akkumulatorvorrichtung;
Fig. 15 die Akkumulatorvorrichtung aus Fig. 14 in zusammengebautem Zustand;
Fig. 16 ein Haltelement mit integriertem Temperierungselement;
Fig. 17 einen Zellstapel aus Rundzellen mit einer kopfseitigen Kühlplatte.

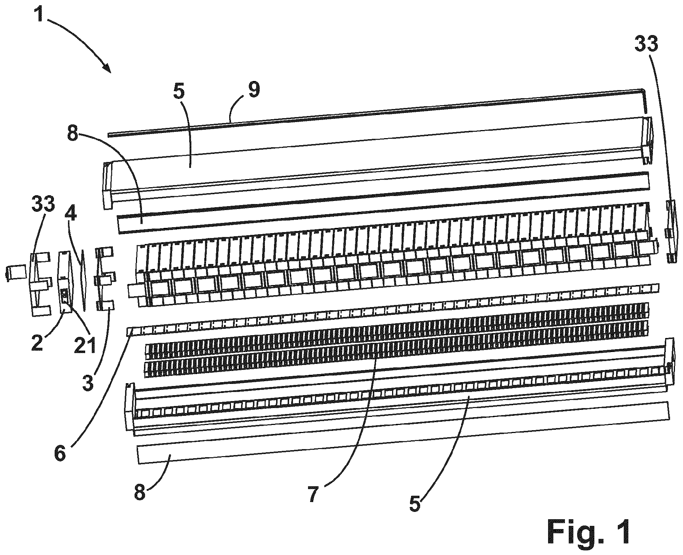

In Fig. 1 ist eine erfindungsgemäße Akkumulatorvorrichtung 1 in einer Explosionsdarstellung gezeigt. Die Akkumulatorvorrichtung 1 umfasst zentral eine Vielzahl von Akkumulatorzellen 2. Die Akkumulatorzellen 2 sind in dieser Variante der Akkumulatorvorrichtung 1 in einem Querschnitt zu einer Längsachse der länglich ausgebildeten Akkumulatorvorrichtung 1 rechteckig mit gegenüberliegenden Polen 21 ausgebildet. Pole der Akkumulatorzellen 2 befinden sich gegenüberliegend an Breitseiten der Akkumulatorzellen 2. Gleichwohl ist es in anderen Konfigurationen auch möglich, dass die Pole an den Längsseiten der Akkumulatorzellen 2 angeordnet sind. Auch andere Anordnungen sind im Rahmen dieser Offenbarung möglich.

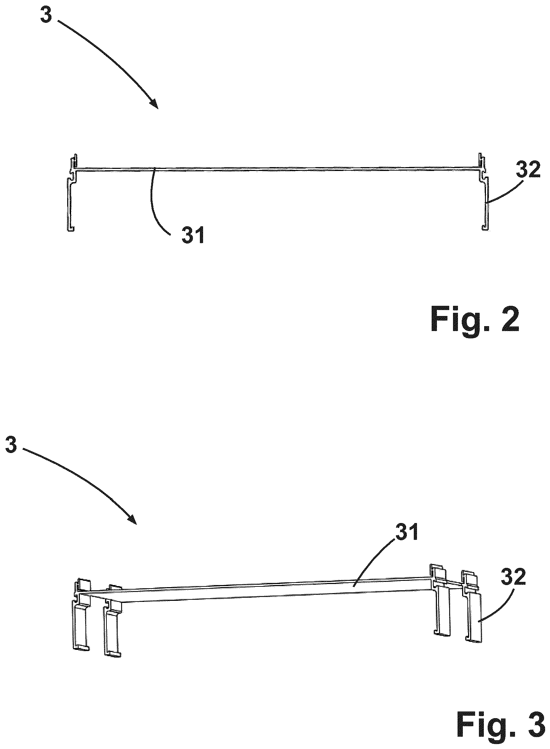

Die Akkumulatorzellen 2 bilden einen linearen Stapel. Hierfür sind für die Akkumulatorzellen 2 Halteelemente 3 vorgesehen. Die Halteelemente 3 sind in Fig. 2 und Fig. 3 detaillierter gezeigt. Die Halteelemente 3 weisen eine Grundfläche 31 und Abstandshalter 32 auf. Die Abstandshalter 32 sind dabei mit einem in Fig. 2 und Fig. 3 nach unten zeigenden, ersten Teil der Abstandshalter 32 und einen in Fig. 2 und Fig. 3 nach oben zeigenden, zweiten Teil ausgebildet. Ein erster Teil eines Abstandshalters 32 ist länger ausgebildet als ein zweiter Teil eines Abstandshalters 32. Der erste Teil eines Abstandshalters 32 ist mit einer Höhe ausgebildet, die einer Höhe einer Akkumulatorzelle 2 angepasst ist. Sind mehrere Abstandshalter 32 vorgesehen, wie dies in Fig. 2 und Fig. 3 ersichtlich ist, sind die Abstandshalter 32 bevorzugt an oder im Bereich von Ecken der Grundfläche 31 angeordnet. Sind beispielsweise vier Abstandshalter 32 vorgesehen, können die ersten Teile der Abstandshalter 32 eine Akkumulatorzelle 2 aufnehmen und randseitig umschließen. Die Abstandshalter 32 müssen nicht vereinzelt angeordnet sein, sondern können auch eine durchgehende Leiste bilden, sodass streng betrachtet nur ein Abstandshalter 32 vorliegt. Ist eine Akkumulatorzelle 2 in ein Halteelement 3 eingelegt, gegebenenfalls mit weiteren Komponenten, kann ein weiteres Halteelement 3 mit dessen zweiten Teil oder Teilen an die ersten Teile des Halteelementes 3 zur Anlage und insbesondere mit diesen verbunden werden. Eine Verbindung kann erfolgen, indem die ersten Teile der Abstandshalter 32 und die ersten Teile der nachfolgenden Abstandshalter 32 geeignet eingerichtet sind, um eine lösbare Verbindung zu ermöglichen. Beispielsweise können die ersten Teile der Abstandshalter 32 in die ersten Teile der Abstandshalter 32 eines anderen Halteelementes 3 eingeklipst werden. Dies ist auch dann möglich, wenn die Halteelemente 3 aus einem Metall oder einer Legierung, insbesondere Aluminium oder einer Aluminiumlegierung, gebildet sind. Die zweiten, kürzeren Teile der Abstandshalter 32 zentrieren die Akkumulatorzellen 2 und tragen zur Steifigkeit eines mit Haltelelementens 3 verbundenen Stapels von Akkumulatorzellen 2 bei. Die Halteelemente 3 können beispielsweise durch Spritzguss oder Strangguss erstellt sein. Eine Ausbildung der Halteelemente 3 aus einem Metall oder einer Legierung bringt den Vorteil, dass die Akkumulatorzellen 2 über eine noch zu erläuternde Kühlung oder Heizung gut temperiert werden können.

Zurückkommend zu Fig. 1 umfasst der Stapel an Akkumulatorzellen 2 und Halteelementen 3 zudem thermische Barrieren 4, welche zwischen einer Akkumulatorzelle 2 und dem nächsten Halteelement 3 eingebracht werden. Die thermischen Barrieren 4 sind relativ dünn ausgebildet und können beispielsweise aus einem Vlies oder einem anderen thermisch isolierenden Material wie einem porösen Kunststoff gebildet sein. Dadurch wird verhindert, dass bei Überhitzung einer einzelnen Akkumulatorzelle 2 ein Temperaturübertrag auf die nächste, benachbarte Akkumulatorzelle 2 in merklichem Ausmaß erfolgt.

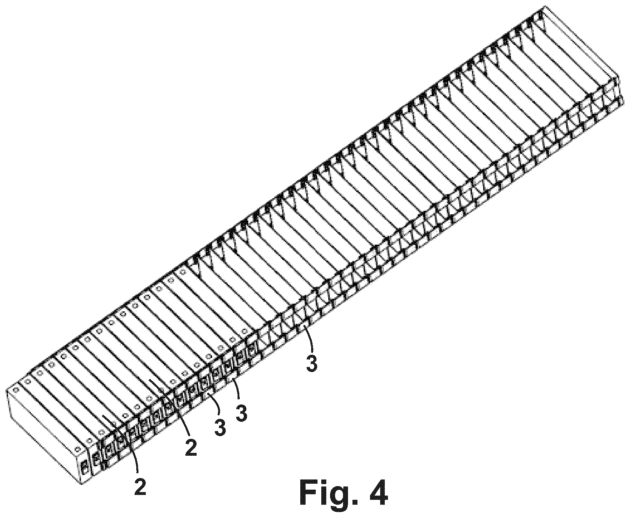

Der aus Halteelementen 3, Akkumulatorzellen 2 und thermischen Barrieren 4 gebildete Stapel ist selbsthaltend ausgebildet. In Fig. 4 ist eine perspektivische Darstellung von Halteelementen 3 und einzelnen Akkumulatorzellen 2 samt thermischen Barrieren 4 gezeigt, wobei lediglich einzelne Halteelemente 3 mit Akkumulatorzellen 2 und thermischen Barrieren 4 belegt sind. Die Halteelemente 3 sind selbsttragend und bilden ein Gerüst für die einzufügenden Komponenten, nämlich die Akkumulatorzellen 2 und die thermischen Barrieren 4.

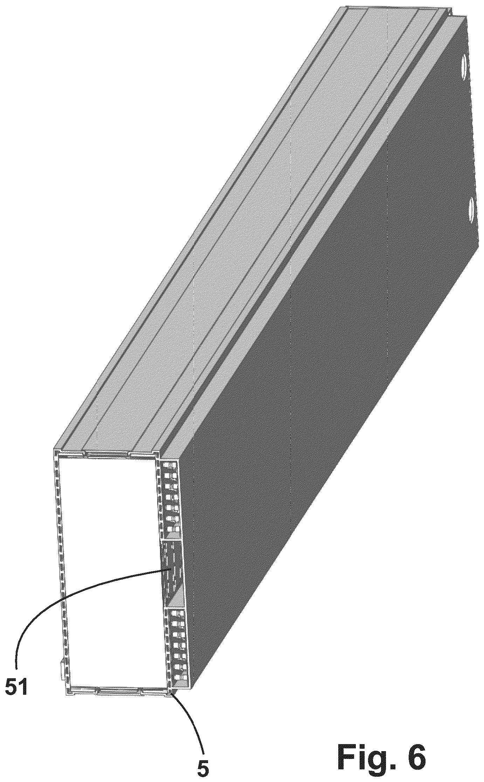

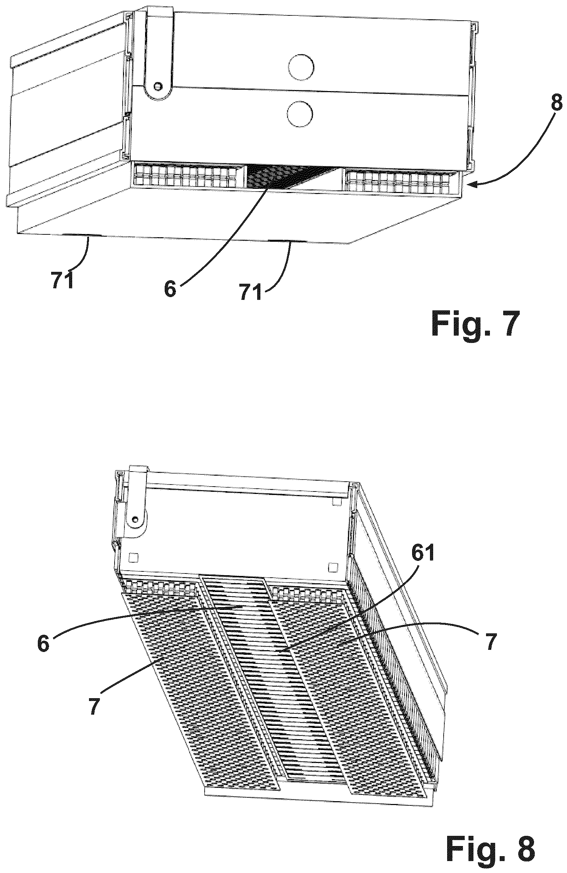

Wie in Fig. 1 ersichtlich, wird der Stapel endseitig von zwei Endplatten 33 abgeschlossen, die ebenfalls als Halteelemente 3 angesehen werden können. Die Endplatten 33 sind ident ausgebildet und mit den ersten Teilen der Abstandhalter 32 zueinander gerichtet. Die Endplatten 33 sind ebenfalls eingerichtet, jeweils eine Akkumulatorzelle 2 aufzunehmen, sind allerdings aus Kunststoff und ohne zweite Teile der Abstandshalter gebildet. Seitlich sind für die Stromleitung und die einzelnen Pole kürzere Stromschienen vorgesehen, die nicht im Detail dargestellt sind. Kopfseitig und fußseitig ist der Stapel an Akkumulatorzellen 2 jeweils von einem Kühlkörper 5 umgeben. Der kopfseitige Kühlkörper 5 weist einen in Fig. 1 nicht näher dargestellten Einlass sowie einen Auslass für ein Fluid auf. Das Fluid kann ein Gas oder eine Flüssigkeit sein, beispielsweise Wasser oder ein Öl. Im Inneren kann der kopfseitige Kühlkörper 5 mit einer Vielzahl von Kanälen ausgestattet sein, welche durch Führung eines Fluids eine effiziente Kühlung oder gegebenenfalls, bei niedrigen Außentemperaturen, auch eine Heizung der Akkumulatorzellen 2 erlauben. Dies wird durch einen Kontakt mit den Halteelementen 3 erreicht, welche wie erwähnt aus einem Metall oder einer Legierung bestehen und daher gut wärmeleitend sind. Somit kann auf effiziente Weise eine Temperatur der Akkumulatorzellen 2 beeinflusst und eingestellt werden. In diesem Zusammenhang ist auch der fußseitige Kühlkörper 5 von entsprechender Bedeutung, der jedoch anders als der kopfseitige Kühlkörper 5 gestaltet ist. Der fußseitige Kühlkörper 5 ist aus mehreren Komponenten zusammengesetzt und weist ein in Fig. 6 ersichtliches Kanalsystem auf, zwischen dem sich zentral eine entlang einer Geraden erstreckende Reihe von Öffnungen 51 gegeben ist, die auch in Fig. 6 in Ansätzen ersichtlich ist. Jeder Akkumulatorzelle 2 ist eine Öffnung 51 zugeordnet. An dem fußseitigen Kühlkörper 5, der ebenso wie der kopfseitige Kühlkörper 5 aus einem Kunststoff gefertigt sein kann, insbesondere im Spritzguss, schließt nach unten hin eine Anordnung mit einem Partikelfänger 7 und einem eingeschobenen, ohne weitere Befestigung haltenden und als Leitblech ausgebildetes Sicherheitselement 6 an, wie dies in Fig. 7 und Fig. 8 ersichtlich ist. Der Partikelfänger 7 kann aus einem oder mehreren Blechen bestehen, welche Erhebungen aufweisen. Die Erhebungen lassen sich in einem Blech auf einfache Weise einformen. In der Ausführungsvariante gemäß Fig. 7 und Fig. 8 sind links und rechts eines zentralen Kanals jeweils zwei übereinander geschichtete Partikelfänger 7 mit Erhebungen eingelegt, wobei die Erhebungen zueinander zeigen.

Das in Fig. 7 und Fig. 8 ersichtliche Leitblech bzw. Sicherheitselement 6 ist mit Perforierungselementen ausgebildet, die Sollbruchstellen 61 darstellen, wobei deren Position exakt den Öffnungen 51 im fußseitigen Kühlkörper 5 entsprechen und diese Öffnungen 51 grundsätzlich abschließen.

Der Übersichtlichkeit nicht dargestellt in Fig. 7 und Fig. 8 ist ein stirnseitiges Umlenkelement, welches die Kompartimente mit den Partikelfängern 7 und dem dazwischen angeordneten zentralen Kanal, an dessen Decke das Sicherheitselement 6 sitzt, abschließt. In Fig. 7 angedeutet erkennbar sind an der gegenüberliegenden Seite der Akkumulatorvorrichtung 1 angeordnete Auslassöffnungen 71, die mit den Kammern, in welchen die Partikelfänger 7 angeordnet sind, in fluider Verbindung stehen.

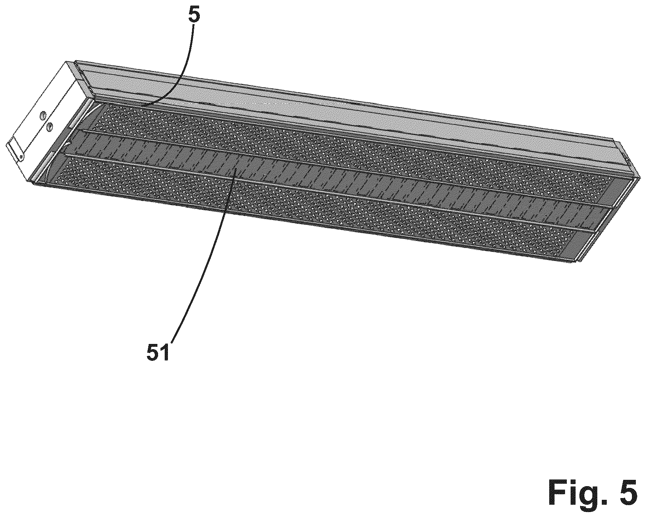

Eine Akkumulatorvorrichtung 1 gemäß Fig. 1 bis Fig. 8 ist ausschließlich durch Komponenten zusammengestellt, welche miteinander durch Klemmen oder auf andere form- und/oder kraftschlüssige Weise miteinander verbunden sind. Dies gilt auch für Polabdeckungen 8 und Stromschienen 9, wie diese in Fig. 1 ersichtlich sind. Die Akkumulatorvorrichtung 1 ist völlig frei von einer stoffschlüssigen Verbindung einzelner Komponenten. Darüber hinaus ist die Akkumulatorvorrichtung 1 als hochsichere Vorrichtung aufgebaut: Wird eine Akkumulatorzelle 2 zu heiß, beispielsweise aufgrund von Versagen, ist zunächst ein thermischer Überschlag auf die nächste Akkumulatorzelle 2 wenig wahrscheinlich, da jede Akkumulatorzelle 2 mit einem Halteelement 3 in Verbindung steht, das wiederum mit den Kühlkörpern 5 in Verbindung steht. Somit kann lokal eine effektive Kühlung erreicht werden. Darüber hinaus ist aufgrund der vorgesehenen thermischen Barrieren 4 eine rasche Wärmeübertragung auf eine nächste, benachbarte Akkumulatorzelle 2 zumindest reduziert. Sollte eine Akkumulatorzelle 2 aufgrund von Versagen auszugasen beginnen, ist hierfür ebenfalls eine Sicherung vorgesehen. Wird der Druck zu groß, drückt das Gas durch die Öffnungen 51 auf die zugehörige Perforation bzw. Sollbruchstelle 61 des darunter liegenden des Sicherheitselementes 6. Wenn der Druck zu hoch wird, sorgt die Perforation dafür, dass sich das Leitblech bzw. Sicherheitselement 6 an dieser Stelle nach unten öffnet. Gas kann dann austreten und in den zentralen Kanal zwischen den Partikelfängern 7 gelangen. Über das erwähnte Umlenkblech wird das Gas dann in die Kompartimente mit den Partikelfängern 7 geleitet, ehe das Gas über die Auslässe 71 weitgehend gereinigt austreten kann.

Die Akkumulatorvorrichtung 1 nach Fig. 1 bis Fig. 8 ist somit frei von stoffschlüssigen Verbindungen, einfach aufgebaut, lauft eine gute Temperierbarkeit von Akkumulatorzellen 2 und zieht ein effizientes Management im Fall eines Schadhaftwerdens einer Akkumulatorzelle 2 vor.

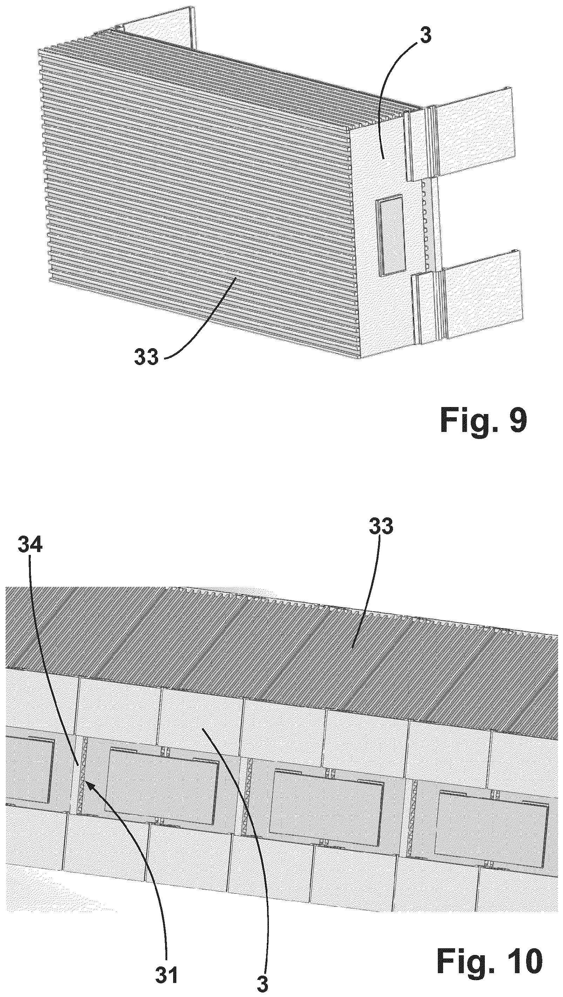

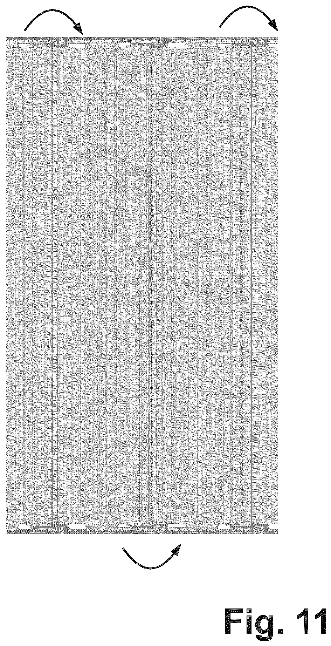

Fig. 9 bis Fig. 13 zeigen unterschiedliche Ausführungsvarianten von Halteelementen 3, mit welchen eine Temperierungsmöglichkeit umsetzbar ist. Fig. 9 bis Fig. 11 zeigen dabei den Aufbau eines Halteelementes 3, welches für eine Temperierung mit Öl als Fluid ausgebildet ist. Das Halteelement 3 ist dabei so ausgebildet, dass die Grundfläche 31 längenmäßig an einer Seite in einem Endbereich 34 etwas länger ausgebildet ist. Dadurch ergibt sich im Wechsel mit einer längeren Ausbildung der Grundfläche 31 bei einer nachfolgenden Akkumulatorzelle 2, oder insbesondere einem Paar von Akkumulatorzellen 2, an der gegenüberliegenden Breitseite, dass die Grundflächen 31 geringfügig und im Wechsel zu gegenüberliegenden Seiten durchgängig überstehen. Wird nun ein Stapel derartiger Akkumulatorzellen 2 in ein Gehäuse eingebracht, sodass sich durch das Anliegen der verlängerten Grundflächen 31 am Gehäuse an der einen oder der gegenüberliegenden Seite für ein Fluid eine Zwangsführung ergibt. Dabei können die Akkumulatorzellen 2 wie in Fig. 9 bis Fig. 11 ersichtlich außenseitig zusätzlich mit einer gerippten Struktur 33 bzw. Leitblechen versehen sein, sodass Wege für ein Fluid geschaffen sind. Die Leitbleche sind mit geraden Kanälen für ein Fluid ausgebildet, es können aber auch gekrümmte Kanäle, insbesondere eine Mäanderführung vorgesehen sein. Ein entsprechender Stapel an Akkumulatorzellen 2 wird in einem Gehäuse verbaut und mit diesem vorzugsweise stoffschlüssig verbunden, sodass eine Dichtheit gegeben ist, auch wenn Öl als Temperierungsmittel eingesetzt wird.

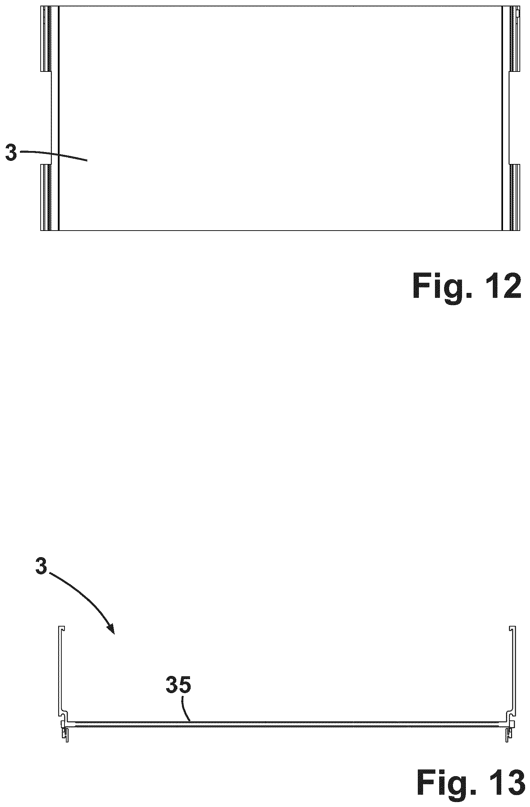

In Fig. 12 und Fig. 13 ist eine Variante für eine Wasserkühlung dargestellt. Anders als bei der zuvor erläuterten Ölkühlung werden in diesem Fall die einzelnen Halteelemente 3 adaptiert, und zwar durch eine Kühlplatte 35. Die Kühlplatte 35 ist so ausgebildet, dass diese einen Einlass sowie einen Auslass für Wasser aufweist. Die Kühlplatte 35 kann beispielsweise durch Schweißen an der Grundfläche 31 angeordnet werden. Hierfür ist die Kühlplatte 35 bevorzugt etwa in Länge und Breite gleich dimensioniert wie die Grundfläche 31. Die Kühlplatte 35 weist zumindest einen Einlass und zumindest einen Auslass für ein Fluid auf, welches die Kühlplatte 35 im Betrieb durchströmt. Bei Bedarf kann über das Fluid nicht nur gekühlt, sondern auch geheizt werden.

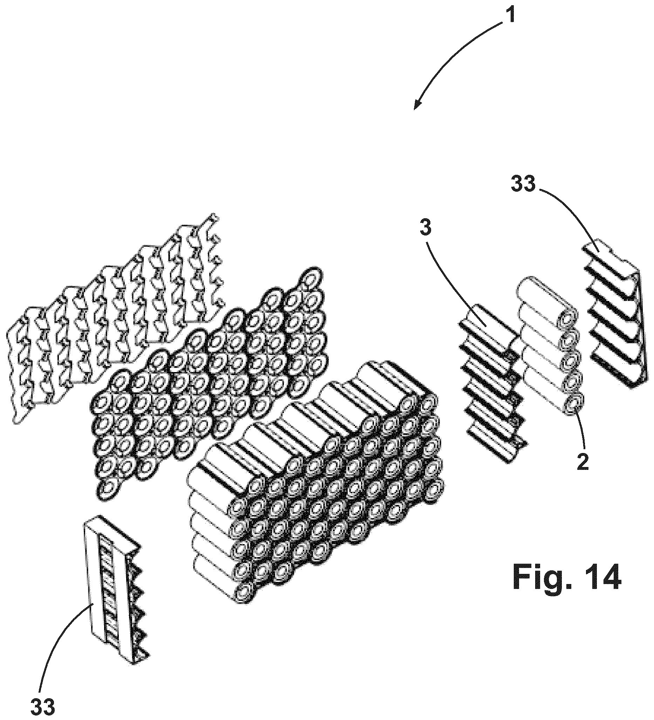

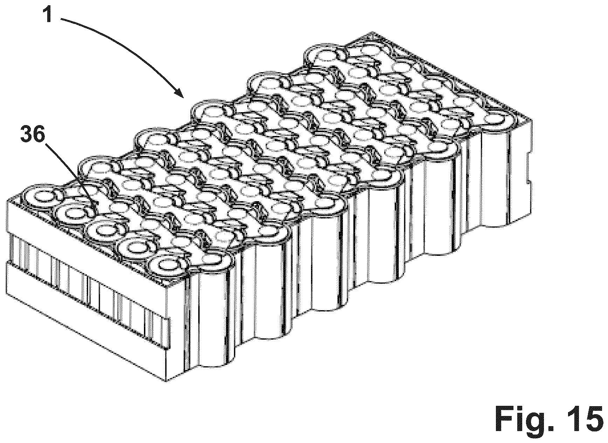

Das erfindungsgemäße Konzept ist nicht auf Akkumulatorzellen 2 mit rechteckigem Querschnitt und verschiedener Anordnung von Polen beschränkt, sondern kann auf Rundzellen angewendet werden, wie dies in Fig. 14 und Fig. 15 ersichtlich ist. Dabei kommt dasselbe Konzept einer stoffschlüssig freien Verbindung von Akkumulatorzellen 2 mit hierfür geeignet ausgelegten Halteelementen 3 sowie Endplatten 33 zur Anwendung, wie sich dies insbesondere aus der Explosionsdarstellung in Fig. 14 ergibt. In zwischen den einzelnen Rundzellenlagen gebildeten, vertikal verlaufenden, durchgehenden Öffnungen 36 (Fig. 15) können Wärmerohre ("Heatpipes") vorgesehen sein, sodass zwischen den Rundzellen Wärme zu- oder abgeführt werden kann. Insbesondere eine Zufuhr von Wärme kann gewünscht sein, um im Winter einen Stapel von Akkumulatorzellen 2 rasch auf eine geeignete Betriebstemperatur bringen zu können.

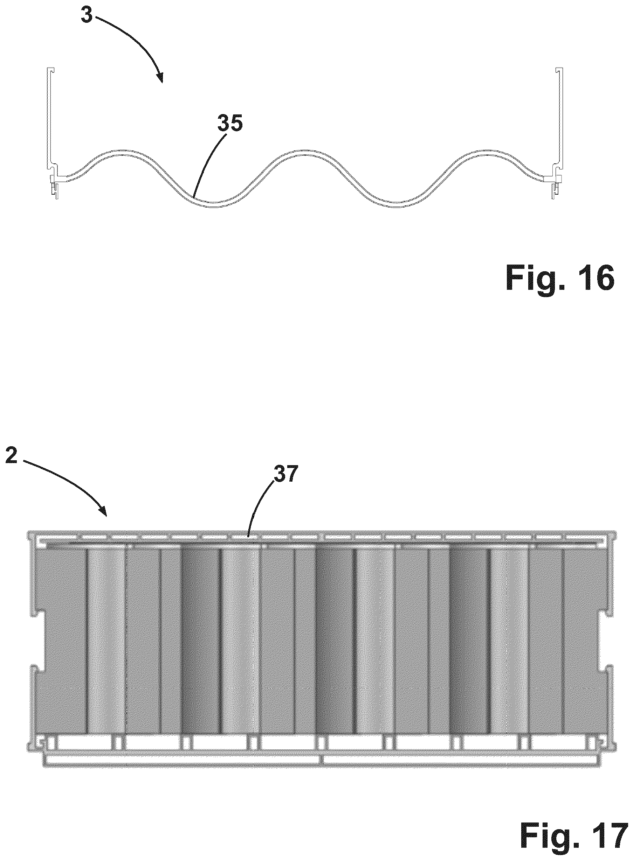

In Fig. 16 ist ein Halteelemente 3 für Rundzellen dargestellt, welches analog wie das Halteelement 3 für prismatische Zellen in Fig. 12 und Fig. 13 mit einer Kühlplatte 35 ausgebildet ist.

Möglich ist es auch, sowohl an einer Oberseite als auch einer Unterseite (oder wie in Fig. 17 ersichtlich gegebenenfalls nur an einer dieser Seiten) einen Kühl- und/oder Heizkörper anzuordnen, beispielsweise eine Fluidzwangsführung 37. Dieser Kühl- und/oder Heizkörper kann mit einem Fluid durchströmt sein. Möglich ist es auch, dass dieser Heiz- und/oder Kühlkörper bzw. allgemein das Temperierungselement so ausgebildet ist, dass der oberseitig angeordnete Heiz- und/oder Kühlkörper mit dem unterseitig angeordnetem Heiz- und/oder Kühlkörper in Fluidverbindung steht. Hierfür können insbesondere für die Fluidverbindungen die sich zwischen den einzelnen Rundzellenlagen ergebenden vertikalen Öffnungen bzw. Verbindungen genutzt werden.

Eine erfindungsgemäße Akkumulatorvorrichtung 1 bietet auch den Vorteil, dass einzelne Akkumulatorzellen 2 rasch getauscht werden können und aufgrund der Herstellung der Akkumulatorvorrichtung 1 ein Recyclingaufwand minimiert ist, da die Einzelteile leicht auseinandergenommen und getrennt werden können.

## Patentansprüche

1. Akkumulatorvorrichtung (1), umfassend eine Vielzahl von Akkumulatorzellen (2), **dadurch gekennzeichnet, dass** die Akkumulatorvorrichtung (1) eine Vielzahl von Haltelementen (3) umfasst, wobei die Haltelemente (3) miteinander verbunden sind und die Akkumulatorzellen (2) aufnehmen.

2. Akkumulatorvorrichtung (1) nach Anspruch 1, **dadurch gekennzeichnet, dass** die Halteelemente (3) miteinander insbesondere lösbar verbunden sind.

3. Akkumulatorvorrichtung (1) nach Anspruch 1 oder 2, **dadurch gekennzeichnet, dass** die Halteelemente (3) miteinander durch Stecken verbunden sind.

4. Akkumulatorvorrichtung (1) nach einem der Ansprüche 1 bis 3, **dadurch gekennzeichnet, dass** die Halteelemente (3) gegossen sind, insbesondere im Spitzguss oder Strangguss.

5. Akkumulatorvorrichtung (1) nach einem der Ansprüche 1 bis 4, **dadurch gekennzeichnet, dass** die Halteelemente (3) aus einem Metall oder einer Legierung, insbesondere Aluminium oder einer Aluminiumlegierung, gebildet sind.

6. Akkumulatorvorrichtung (1) nach einem der Ansprüche 1 bis 5, **dadurch gekennzeichnet, dass** die Akkumulatorzellen (2) in einem länglichen Stapel angeordnet sind.

7. Akkumulatorvorrichtung (1) nach einem der Ansprüche 1 bis 6, **dadurch gekennzeichnet, dass** die Halteelemente (3) endseitig eines Stapels Endplatten (33) als Halteelemente (3) umfassen.

8. Akkumulatorvorrichtung (1) nach einem der Ansprüche 1 bis 7, **dadurch gekennzeichnet, dass** die Akkumulatorzellen (2) als prismatische Zellen oder als Rundzellen ausgebildet sind.

9. Akkumulatorvorrichtung (1) nach einem der Ansprüche 1 bis 8, **dadurch gekennzeichnet, dass** zwischen den Akkumulatzorzellen (2) thermische Barrieren (4) angeordnet sind.

10. Akkumulatorvorrichtung (1) nach einem der Ansprüche 1 bis 9, **dadurch gekennzeichnet, dass** die Akkumulatorvorrichtung (1) ein oder mehrere Temperierungselemente aufweist, welche die Akkumulatorzellen (2) umgeben und/oder mit diesen thermisch verbunden sind, um die Akkumulatorzellen (2) auf eine vorbestimmte Temperatur zu bringen.

11. Akkumulatorvorrichtung (1) nach einem der Ansprüche 1 bis 10, **dadurch gekennzeichnet, dass** die Akkumulatorvorrichtung (1) einen oder mehrere Kühl- und/oder Heizkörper (5) umfasst, welche die Akkumulatzorzellen (2) umgeben, wobei die Kühl- und/oder Heizkörper (5) eingerichtet sind, von einem Fluid durchströmt zu werden.

12. Akkumulatorvorrichtung (1) nach einem der Ansprüche 1 bis 11, **dadurch gekennzeichnet, dass** Akkumulatorvorrichtung (1) dazu eingerichtet ist, die Akkumulatorzellen (2) aktiv zu temperieren.

13. Akkumulatorvorrichtung (1) nach einem der Ansprüche 1 bis 12, **dadurch gekennzeichnet, dass** die Akkumulatzorzellen (2) in einem, vorzugsweise linearen, Stapel angeordnet sind und der Stapel kopfseitig und fußseitig von einem Kühl- und/oder Heizkörper (5) umgeben ist.

14. Akkumulatorvorrichtung (1) nach einem der Ansprüche 1 bis 13, **dadurch gekennzeichnet, dass** die Akkumulatorvorrichtung (1) ein Sicherheitselement (6) mit Sollbruchstellen (61), vorzugsweise einer oder mehrerer Sollbruchstellen (61) für jede einzelne Akkumulatzorzelle (2), umfasst, wobei die Sollbruchstellen (61) bei einem vorbestimmten Druck, der durch eine Akkumulatorzelle (2) verursacht wird, öffnen.

15. Akkumulatorvorrichtung (1) nach einem der Ansprüche 1 bis 14, **dadurch gekennzeichnet, dass** Akkumulatorvorrichtung (1) ein Gasleitsystem (8) umfasst, durch welches von einer Akkumulatorzelle (2) gegebenenfalls abgegebene Gase leitbar sind, wobei im Gasleitsystem (8) Partikelfänger (7) angeordnet sind.
